# EUROPÄISCHE PATENTSCHRIFT

(11) **EP 2 437 203 B1**
(45) Veröffentlichungstag und Bekanntmachung des Hinweises auf die Patenterteilung: **06.11.2013**
(21) Anmeldenummer: 11007871.4
(22) Anmeldetag: 28.09.2011
(51) Int. Cl.: G06K 7/10, G06K 19/07

(54) **Tragbarer Datenträger sowie Verfahren zum Anzeigen des Vorhandenseins einer externen NFC-Einheit**
Portable data carrier and method for displaying the existence of an external NFC unit
Support de données portatif et procédé d'affichage de la présence d'une unité NFC externe

(30) Priorität: 30.09.2010 DE 102010047134
(43) Veröffentlichungstag der Anmeldung: 04.04.2012
(73) Patentinhaber: Giesecke & Devrient GmbH, 81677 München (DE)
(72) Erfinder: Baldischweiler, Michael, 81825 München (DE)

(56) Entgegenhaltungen:
- EP-A2- 1 513 098
- US-A- 6 161 762
- US-A1- 2006 079 282
- US-A1- 2010 029 202
- US-A1- 2010 181 377

## Beschreibung

Die Erfindung betrifft einen tragbaren Datenträger sowie ein Verfahren zum Anzeigen des Vorhandenseins einer externen NFC-Einheit mittels eines Datenträgers, wobei der Datenträger eine Kontaktlosschnittstelle, eine kontaktbehaftete Schnittstelle jeweils eingerichtet zur Datenkommunikation und eine Detektiereinheit aufweist und mittels einer Datenleitung der kontaktbehafteten Schnittstelle einem ersten Endgerät anzeigt, ob ein NFC-Signal einer externen NFC-Einheit detektiert wurde.

Als eine Datenkommunikation wird eine Signalübertragung, eine wechselseitige Steuerung und in einfachen Fällen auch eine Verbindung von/zwischen technischen Geräten verstanden. In der Informationstheorie wird eine Kommunikation unter anderem durch das Sender-Empfänger-Modell geprägt: Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht d.h. die zu übertragene Information dekodieren kann. In der Informationstheorie geht die Kommunikation auch über das syntaktische Sender-Empfänger-Modell hinaus: Die Bedeutung und der Informationsgehalt der Kommunikation sind immer von dem semantischen Kontext einer Übertragung abhängig.

Bei einem tragbaren Datenträger handelt es sich vorzugsweise um Datenträger mit entsprechenden Sicherheitsfunktionalitäten, wie z.B. Smart Cards, Chipkarten, Token, Massenspeicherkarten, Multimediakarten und/ oder um elektronische Identitätsdokumente, wie beispielsweise ein elektronischer Personalausweis, Reisepass mit, auf einem Chip gespeicherten maschinenlesbaren Identifikationsdaten einer Person. Insbesondere wird eine Chipkarte unter dem Begriff tragbarer Datenträger verstanden, wobei das Anwendungsgebiet der Chipkarte sehr vielfältig ist, beispielsweise als Kredit- oder Debit-Bezahlkarte, Gesundheitskarte, Zutrittsberechtigungskarte, Firmenausweis, Identifikationskarte oder Führerschein.

Diese tragbaren Datenträger haben inzwischen vermehrt sowohl eine kontaktbehaftete Schnittstelle als auch eine Kontaktlosschnittstelle. Das Betriebssystem des tragbaren Datenträgers ist dabei so ausgelegt, dass die Kontaktlosschnittstelle beispielsweise gemäß einer der Normen ISO/IEC 14443, 15693 oder 18092 und die kontaktbehaftete Schnittstelle beispielsweise gemäß Norm ISO/ IEC 7816 oder der Secure Digital Card Spezifikation bedient werden können, sodass Datenkommunikation zu externen Einheiten oder Endgeräten möglich ist.

In der EP 1801741 A2, auf deren gesamte Offenbarung hier eindeutig Bezug genommen wird, werden unterschiedliche Kontaktlos-Datenkommunikationen, insbesondere NFC und RFID-Systeme beschrieben. Dabei werden tragbare Datenträger beispielsweise als Transponder in RFID-Systemen eingesetzt.

Herkömmlich erfolgt sowohl die Energieversorgung in einem RFID-System als auch der Datenaustausch zwischen dem passiven Transponder und einem Lesegerät unter Verwendung magnetischer oder elektromagnetischer-Felder je nach Frequenzbereich mittels einer Antennenspule (z.B. 13,56 MHz) oder eine elektromagnetischen Antenne (z.B. 868 MHz). Typische Energiereichweiten solcher Systeme sind etwa 10 cm für ISO 14443 und bis zu 1 m für ISO 15693 kompatible Systeme.

Die Reichweite, innerhalb derer eine Kommunikation im System durch Datenübertragung möglich ist, kann erhöht werden durch Verwenden von aktiven Transpondern, also Transpondern mit eigener Energieversorgung. Die Energieversorgung des aktiven Transponders, beispielsweise in Form einer Batterie, betreibt dessen elektronische Schaltung. RFID-Systeme, beispielsweise für verschiedene Kopplungsarten, sowie eine Lastmodulation unter Verwendung eines Hilfsträgers in induktiv gekoppelten RFID-Systemen werden insbesondere unter Kapitel 3.2 in dem "RFID Handbuch" von Klaus Finkenzeller beschrieben.

Zur einfachen und schnellen kontaktlosen Kommunikation zwischen zwei Geräten wurde eine induktive Übertragungstechnik entwickelt, welche als sogenannte Nahfeldkommunikation (NFC,Near Field Communication) bekannt ist. Diese Technik wird in mobilen Endgeräten, beispielsweise Mobilfunkgeräten oder PDAs integriert, um eine Kommunikation zwischen den Geräten oder mit einem Computer zu ermöglichen. Die Kopplung der beiden Geräte findet über Spulen statt, wobei die Trägerfrequenz wie in RFID-Systemen 13,56 MHz beträgt. Gemäß NFC-Standard ISO/IEC 18092 gibt es in NFC-Systemen einen aktiven Kommunikationsmodus und einen passiven Kommunikationsmodus. Endgeräte, die eine NFC-Schnittstelle aufweisen werden im Folgenden als NFC-Einheit bezeichnet. Die typische Reichweite von NFC-Geräten beträgt etwa 20 cm.

Die eingesetzten Verfahren zur Datenübertragung mittels NFC sind denen kontaktloser Datenträger sehr ähnlich. NFC-Einheiten sind daher auch in der Lage, mit kontaktlosen Datenträgern zu kommunizieren oder einen kontaktlosen Datenträger zu simulieren, indem eine Lastmodulation erzeugt wird. Der Datenträger, der zusätzlich zu seiner kontaktbehafteten Schnittstelle eine Kontaktlosschnittstelle, insbesondere NFC-Schnittstelle aufweist, ist zur Realisierung des zweiten Systems in den Betriebsarten "Card Emulation", "Reader Emulation" und "Peer to Peer" (P2P) betreibbar, wobei bei "Reader-Emulation" der tragbare Datenträge eine RFID-Reader-Funktionalität erlangt, was auch als NFC-Mode "Being Reader" bezeichnet.

Aus der US 2010/0181377 A1 ist ein NFC Gerät bestehend aus einem Antennenträger und einer diesem Träger entnehmbaren SD Karte bekannt. Der Träger weist einen Steckplatz zum kontaktbehafteten Verbinden mit der Karte auf. Der Steckplatz ist weiterhin mit einer NFC-Antenne 512 über zwei Kontaktfelder verbunden, wodurch die mit dem Steckplatz verbundene Karte eingerichtet ist, Kommandos über die NFC-Antenne zu empfangen und zu versenden. Anspruch 1 ist gegenüber diesem Dokument abgegrenzt.

Aus der US 2010/0029202 A1 ist ein System zum Betreiben von NFC-Kommunikation mit einem Mobiltelefon mit erschöpfter/ defekter Batterieversorgung bekannt. Dabei wird vorgeschlagen, die Energie zum Betreiben eines im Mobiltelefon eingebrachten Sicherheitselements bzw. Chipkarte aus dem angelegten NF-Feld eines externen NFC-Geräts zu entnehmen, wenn beispielsweise eine Authentisierung mittels Sicherheitselement oder Chipkarte notwendig ist.

Es ist mitunter notwendig, dass Daten während dem Aufrufen oder Abarbeiten einer Applikation in einem ersten Endgerät oder dem tragbaren Datenträger über die Kontaktlosschnittstelle mittels Datenkommunikation gesendet oder empfangen werden müssen. Derartige Applikation können sehr vielfältig sein, nur beispielhaft seien hier Bezahlapplikationen, Nahverkehrapplikationen, Zutrittsberechtigungen, Digital-Rights-Management-Applikationen, Authentifizierungs- oder Authentisierungsapplikationen, Signaturapplikationen, Informationsapplikationen erwähnt. Eine Applikation ist dabei eine Anwendungssoftware, die ausgeführt wird, um eine spezielle Funktionalität, beispielsweise einen Bezahlvorgang, PIN-Prüfung etc. zur Verfügung zu stellen.

Problematisch ist, wenn ein Datenträger, der in Datenkommunikation mit einem ersten Endgerät via kontaktbehafteter Schnittstelle ist, über die Kontaktlosschnittstelle in Datenkommunikation mit einer externen NFC-Einheit, insbesondere einem NFC-Lesegerät oder einem NFC-Transponder, treten möchte. Aufgrund der geringen Reichweite von ca. 20cm, muss sichergestellt sein, inwieweit bei Auswahl der NFC-Datenkommunikation mittels ersten Endgeräts, eine externe NFC-Einheit vorhanden ist.

Zum Betrieb im kontaktbehafteten Modus wird die Energieversorgung für einen Datenträger vorrangig vom Endgerät bereitgestellt. Ist das Endgerät mobil, ist die Energieversorgung durch einen aufladbaren Akkumulator oder eine Batterie bereitgestellt und somit nur in einem gewissen zeitlichen Rahmen verfügbar. Zu diesem Zweck wird zum Zweck der effizienten Energieversorgung des Endgeräts der Datenträger nicht kontinuierlich mit Energie versorgt. Ist der Datenträger beispielsweise eine Massenspeicherkarte und in Verwendung als Musikdateienspeicher, z.B. mp3-Dateien, in einem Endgerät eingesteckt, so wird bei Ausführen einer Musikdatei, diese Datei stückweise in eine flüchtigen Speicher des Endgeräts kopiert. Zwischen jedem stückweisem Kopieren wird die Energieversorgung für die Massenspeicherkarte abgeschaltet. Ein Betrieb im Kontaktlosmodus ist dann nicht stabil möglich, da eine initiierte Kommunikation mitunter auf ein NFC-Signal der NFC-Einheit wartet. Ist die Wartezeit größer als die Zeit, die der Datenträger standardmäßig mit Energie versorgt wird, schaltet das Endgerät die Energieversorgung ab.

Der Erfindung liegt daher die Aufgabe zugrunde, einen tragbaren Datenträger und ein Verfahren für den Datenträger bereitzustellen, bei der eine Datenkommunikation stabil ist, insbesondere ohne Kommunikationsunterbrechung aufgrund der Abschaltung der Energieversorgung seitens eines Endgeräts.

Die Erfindung ist gegenstand der unabhängigen Patentansprüche. Vorteilhafte Ausgestaltungen sind in den jeweils abhängigen Ansprüchen beschrieben.

Die Aufgabe wird durch einen tragbarer Datenträger, insbesondere Chipkarte, gelöst mit einer kontaktbehafteten Schnittstelle, die zur Datenkommunikation mit einem ersten Endgerät eingerichtet ist, einer Kontaktlosschnittstelle, die zur Datenkommunikation mit einer externen NFC-Einheit eingerichtet ist und einer Detektiereinheit, die zum Detektieren eines NFC-Signals der externen NFC-Einheit eingerichtet ist. Die kontaktbehaftete Schnittstelle weist dazu eine Datenleitung auf, wobei über die Datenleitung ein, vom Datenträger erzeugtes Datensignal an das erste Endgerät übertragbar ist, und das Datensignal anzeigt, ob ein NFC-Signal detektiert wurde.

Als erstes Endgerät wird dabei ein Endgerät beispielsweise ein Mobiltelefon, eine Digitalkamera, ein PDA, ein Notebook, ein digitaler Bilderrahmen, ein Navigationssystem etc. verstanden, wobei in einer vorteilhaften Ausgestaltung der Datenträger mechanisch im ersten Endgerät eingesteckt ist und über die kontaktbehaftete Schnittstelle mit Energie versorgt wird. Dadurchkann eine Energiequelle in dem Datenträger selbst entfallen.

Bei dem Datenträger ist eine NFC-Sende-/Empfangseinheit vorgesehen, über das der Datenträger mit der externen NFC-Einheit kontaktlos kommuniziert. Dabei ist in einer Ausführung die Spule für die NFC-Verbindung im ersten Endgerät enthalten. Dies hat den Vorteil, dass ein im Endgerät eingesteckter Datenträger eine höhere NFC-Kommunikationsreichweite aufweisen kann, da das Endgerät mitunter eine abschirmende Wirkung auf die NFC-Kommunikation haben kann. Bei Verwendung der NFC-Spule des ersten Endgeräts sind diese Abschirmprobleme berücksichtigt. In einer alternativen Ausgestaltung, der Datenträger eine NFC-Verbindung aufbaut ohne auf Bauteile des ersten Endgeräts zurückgreifen zu müssen.

Mit dem anzeigenden Datensignal wird erreicht, dass das erste Endgerät nicht dazu veranlasst wird, die Spannungsversorgung abzuschalten, solange der Datenträger noch kein NFC-Signal erhalten hat. Weiterhin wird dem Endgerät angezeigt, ob überhaupt eine Datenkommunikation mit der externen NFC-Einheit möglich ist.

Die Anzeige kann für einen Benutzer visualisiert werden, beispielsweise auf einem Display des ersten Endgeräts. Somit weiß ein Benutzer, ob ein NFC-Signal, vorhanden ist und kann dementsprechend seine Applikationen auswählen.

Das NFC-Signal ist insbesondere das NFC-Feld, welches von der externen NFC-Einheit ausgesendet ist. In diesem Fall ist der Datenträger als ein aktiver oder passiver Transponder für die NFC-Datenkommunikation ausgestaltet. Nach Detektieren des NFC-Feldes wird dem Endgerät über die Datenleitung signalisiert, dass die NFC-Einheit in Kommunikationsreichweite ist. In diesem Fall ist die externe NFC-Einheit ein zweites Endgerät. Nach Anzeigen des detektierten NFC-Signals im ersten Endgerät, wird das Endgerät dazu veranlasst, die Energieversorgung zu deaktivieren, da die Energieversorgung des Datenträgers nun über das zweite Endgerät erfolgen kann. Somit wird eine Energiequelle im ersten Endgerät nicht weiter zum Betreiben des Datenträgers benötigt, sodass Energiekapazität der Energiequelle gespart werden kann.

Alternativ ist die externe NFC-Einheit ein passiver oder aktiver Transponder, der beispielsweise Daten beinhaltet, die vom ersten Endgerät zur Abarbeitung einer Applikation benötigt werden. Diese Daten sind eventuell geografische Standortdaten, Transponderidentifikationen etc. Nach Anzeigen des detektierten NFC-Signals mittels Datensignal über die Datenleitung dem ersten Endgerät, wird das erste Endgerät die Energieversorgung nicht deaktivieren, sodass eine NFC-Datenkommunikation nicht unterbrochen wird. Durch diese Vorgehensweise wird eine Wiederholung des Aufbaus der NFC-Datenkommunikation vermieden.

Insbesondere weist der Datenträger ein Sicherheitselement auf. Dieses Sicherheitselement ist in Form eines sicheren Smart Card Chips, beispielsweise eines SAM-Moduls, eines SIM-Moduls etc. eingebracht und zum Ausführen sicherheitsrelevanter Funktionen, wie beispielsweise PIN-Prüfung, TAN-Prüfung, digitale Signaturerstellung, Verschlüsseln und Entschlüsseln von Daten, Prüfung digitaler Rechte vorgesehen. Das zu detektierende NFC-Signal der externen NFC-Einheit ist dabei insbesondere ein Eingangssignal für das Sicherheitselement. Da die Funktionen des Sicherheitselements sicherheitsrelevant sind, benötigen sie meist einen höheren Rechenaufwand und demzufolge einen größeren Zeitaufwand zur Abarbeitung. Ein Unterbrechen der Energieversorgung während einer derartigen Funktionsbearbeitung würde ein erhöhtes Sicherheitsrisiko darstellen und einen Neustart der NFC-Datenkommunikation und Ausführung der Funktion des Sicherheitselementes mitunter einen erheblichen Zeitmehraufwand bedeuten.

Insbesondere wird in der Detektiereinheit das Trägersignal des NFC-Signals ausgewertet, wobei in der Detektiereinheit ein digitaler Zähler vorgesehen ist, der die Anzahl der Schwingungen des Trägersignals erfasst und bei einem vordefinierten Zählerstand das Detektieren des NFC-Signals anzeigt. Somit ist sichergestellt, dass das Trägersignal eine gewisse Zeit anliegt, sodass man von einer stabil etablierten Kontaktlosdatenkommunikation ausgehen kann.

In einer bevorzugten Ausgestaltung ist der Datenträger eine NFC-µSD Karte. Die kontaktbehaftete Schnittstelle zwischen der Karte und dem ersten Endgerät ist dabei nach der SD-Spezifikation Version 3.00 ausgestaltet und die karte ist im sogenannten SD-Mode. Dabei ist die Datenleitung zur Anzeige des Datensignals, ob ein NFC-Signal detektiert wurde, die dat0 Leitung. Gemäß der Version 3.00 SD-Spezifikation ist das Beschalten der dat0 Leitung als ein BUSY-Signal auswertbar, siehe dazu Seite 35. Das heißt, wird diese Datenleitung in einem ersten logischen Zustand betrieben, wird gemäß SD-Protokoll dem ersten Endgerät angezeigt, dass die Versorgungsspannung über die kontaktbehaftete Schnittstelle deaktiviert werden kann, wohingegen in einem zweiten logischen Zustand des Datensignals die Versorgungsspannung aktiviert bleiben muss.

Der Datenträger kann im aktiven oder passiven Lastmodulationsmodus, als Lesegerät oder auch als Transponder betrieben werden. Dadurch ist ein hohes Maß an Flexibilität erreicht, wodurch der Datenträger vielseitig einsetzbar und maximal energieeffizient (ausgehend von der Energiequelle des ersten Endgeräts) betrieben werden kann.

Im Erfindungsgedanken ist ebenfalls ein Verfahren vorgeschlagen, welches die gestellte Aufgabe löst. Das Verfahren zum Anzeigen des Vorhandenseins einer externen NFC-Einheit mittels eines Datenträgers, wobei der Datenträger über eine kontaktbehaftete und eine kontaktlose Schnittstelle verfügt umfasst die Verfahrensschritte: Versorgen des Datenträgers mit Energie über eine kontaktbehaftete Schnittstelle; Detektieren eines NFC-Signals der externen NFC-Einheit mittels einer Detektiereinheit innerhalb des Datenträgers; Übertragen eines Datensignals über die kontaktbehaftete Schnittstelle derart, dass ein erster logischer Zustand des Datensignal einem entsprechend elektrisch leitend verbundenen ersten Endgeräts anzeigt, dass ein NFC-Signal detektiert wurde und ein zweiter logischer Zustand des Datensignals anzeigt, dass kein NFC-Signal detektiert wurde.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein. Es zeigen:
- Figur 1: einen erfindungsgemäßen tragbaren Datenträger in Datenkommunikation mit einem ersten Endgerät und einer externen NFC-Einheit;
- Figur 2: eine detailliertere Darstellung des in Figur 1 gezeigten Datenträgers;
- Figur 3: eine Weiterbildung des in Figur 2 dargestellten tragbaren Datenträgers;
- Figur 4: ein erstes Ausführungsbeispiel einer Detektiereinheit für einen erfindungsgemäßen Datenträger der Figuren 1 bis 3
- Figur 5: ein zweites Ausführungsbeispiel einer Detektiereinheit für einen erfindungsgemäßen Datenträger der Figuren 1 bis 3

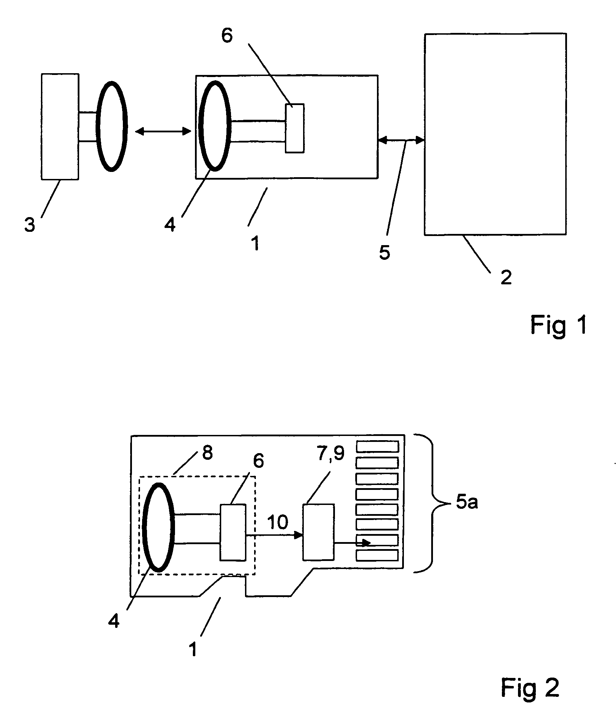

Figur 1 zeigt einen tragbaren Datenträger 1 gemäß Erfindung, der über eine Kontaktlosschnittstelle 4 und eine kontaktbehaftete Schnittstelle 5 verfügt. Der Datenträger 1 weist eine Detektiereinheit 6 auf und ist in Form einer Chipkarte ausgestaltet. Die Chipkarte steht in einer kontaktbehafteten Datenkommunikation mit einem ersten Endgerät 2. Die Chipkarte steht in einer NFC Datenkommunikation mit einer externen NFC-Einheit 3.

Die Chipkarte 1 ist hierbei eine Secure Digital (SD) Karte, die im ersten Endgerät, beispielsweise einem Smart Phone, PDA, Notebook, Navigationssystem, Digitalkamera, digitalem Fotorahmen eingesteckt ist. Über das erste Endgerät 2 wird die SD-Karte 1 mit Energie versorgt. Wird in dem Endgerät 2 eine Applikation aufgerufen, die eine Datenkommunikation mit der SD-Karte 1 benötigt, wird die SD-Karte 1 aktiviert. Wird im weiteren Ablauf der Applikation ein Datum von der externen NFC-Einheit 3 benötigt, muss dazu ein NFC-Signal 10 der externen NFC-Einheit 3 an der SD-Karte 1 anliegen. Dieses NFC-Signal 10 wird nun von der Detektiereinheit 6 erfasst. Über eine Datenleitung der kontaktbehafteten Schnittstelle 5 wird nun dem ersten Endgerät 2 angezeigt, ob das NFC-Signal 10 vorhanden ist. Der logische Zustand des Datensignals auf der Datenleitung zeigt dem Endgerät 2 an, ob die Karte 1 zwischenzeitlich deaktiviert werden kann oder ob kontinuierlich Energie zum Betrieben der Karte 1 angelegt sein muss. Diese Datenleitung erfüllt also zum einen den Zweck, dass dem Endgerät 2 angezeigt wird, ob das NFC-Signal 10 vorhanden ist und unabhängig davon zum anderen, ob die Karte 1 weiterhin mit Energie zu versorgen ist. Abhängig von dem logischen Zustand auf der Datenleitung wird nun die Energie abgeschaltet, um die Energiequelle des ersten Endgeräts 2 nicht unnötig zu belasten oder alternativ die Energie nicht abgeschaltet wird, um die Datenkommunikation zwischen Karte 1 und NFC-Einheit 3 nicht zu unterbrechen. Ist nämlich die NFC-Einheit 3 ein zweites Endgerät und ist in der Lage, die Karte 1 neben der Datenübertragung auch mit Energie zu versorgen, so ist der Betrieb der Karte 1 seitens des ersten Endgeräts 2 unnötig.

In Figur 2 ist eine detaillierte Darstellung der in Figur 1 beschriebenen Karte 1 gezeigt. Die Karte 1 ist hier eine Micro-Secure-Digital (µSD) Karte mit einer gestrichelt dargestellten eigenen NFC-Sende-/Empfangseinheit 8. Alternativ und nicht dargestellt, greift die µSD Karte 1 über eigene Antennenanschlüsse auf eine NFC-Antenne des ersten Endgeräts 2 zur Einrichtung einer kontaktlosen Datenkommunikation mit der NFC-Einheit 3 zurück. Die Karte 1 weist weiterhin ein Sicherheitselement 7 und eine Prozessoreinheit 9 auf. Das Sicherheitselement 7 ist insbesondere ein Smart Card Chip mit ROM, RAM, CPU, EEPORM, in welchem sicherheitsrelevante Funktionen ausgeführt werden können. Das Sicherheitselement 7 kann als secure single chip auf dem Schaltkreis der Karte 1 untergebracht sein. Insbesondere Bezahlapplikationen und damit verbundene TAN-Prüfungen, Authentifizierungs- und Authentisierungsfunktionen, PIN-Prüfung, Verschlüsseln und Entschlüsseln von sicherheitskritischen Informationen und Daten, Zugangsberechtigung, Digital Rights Management für Mediadateien, digitale Signaturerstellung und Signaturprüfung, allgemeine Geldkartenapplikationen, Kredit- und Debitbezahlapplikationen und/ oder Identifizierungsfunktionen können mit diesem Sicherheitselement 7 realisiert werden. Der Vorteil dieses Sicherheitselements 7 ist die Vertrauenswürdigkeit, da alle Berechnungen, Applikationen, Funktionen etc. nicht im unsicheren ersten Endgerät 2, sondern in einer abgesicherten Umgebung innerhalb der µSD Karte 1 durchgeführt werden können.

Da derartige Funktionen/ Applikationen rechen- und zeitintensiv sein können und dazu Datenkommunikation über die Kontaktlosschnittstelle 4 sowie die kontaktbehaftete Schnittstelle 5 eingerichtet sein müssen, darf für derartige Berechnung die Energieversorgung der Karte 1 nicht unterbrochen werden. Das Endgerät ist standardmäßig mit einer wiederaufladbaren Batterie ausgestattet. Diese Batterie hat eine zeitlich begrenzte Ladungskapazität und wird während des Betriebs des Endgeräts 2 stetig Ladungskapazität verlieren. Um einen zeitlich langen Betrieb aufrechterhalten zu können, werden in dem Endgerät 2 stromsparende Maßnahmen durchgeführt. Eine dieser Maßnahmen ist das Abschalten der SD-Karte 1, wenn Sie nicht benötigt wird. Auch bei der Datenkommunikation zwischen Endgerät 2 und SD-Karte 1 wird die Karte 1 periodisch aktiviert und deaktiviert, um Ladungskapazitäten einzusparen. Bei der Übertragung von Musikdateien (mp3) zum Abspielen im Endgerät 2 oder Bilddateien (jpg) zum Betrachten auf einem Display des Endgeräts 2 werden die Daten in beispielsweise 128kByte großen Dateiblöcken von der SD-Karte 1 in einen Speicherbereich, insbesondere RAM-Bereich, des Endgeräts 2 übertragen. Zwischen den Blöcken wird die Sd-Karte 1 deaktiviert, indem die Energieversorgung abgeschaltet wird.

Auch routinemäßig schaltet das Endgerät 2 nach einer Zeitspanne, in der die SD-Karte 1 keine Datenkommunikation mit dem Endgerät 2 durchführt, die Sd-Karte 1 ab. Wenn zwischenzeitlich Kontaktloskommunikation zwischen der Karte 1 und NFC-Einheit 3 durchgeführt wird, wäre aufgrund dieser Abschaltung ein neuer Aufbau der Kontaktloskommunikation zu einem späteren Zeitpunkt notwendig. Dies ist zum einen unsicher und zum anderen für einen Benutzer inakzeptabel, sodass mittels der Detektiereinheit und der Datenleitung dem Endgerät 2 angezeigt wird, ob eine Energieversorgung notwendig ist oder nicht.

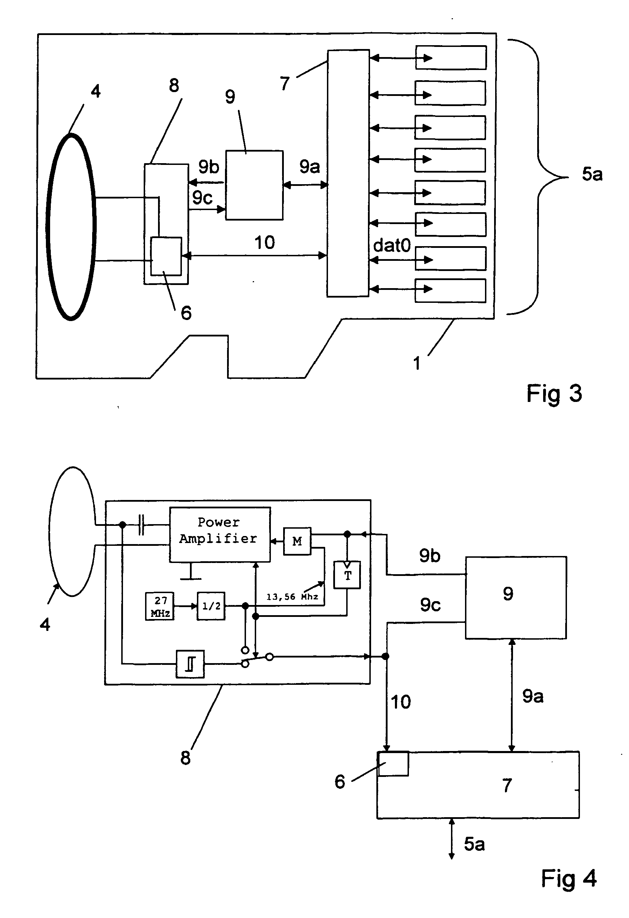

Figur 3 zeigt eine Weiterbildung der in Figur 2 dargestellten µSD-Karte 1. Gemäß der SD-Spezifikation Version 3.00 kann die µSD Karte 1 im SD-Mode die Möglichkeit, mittels der Datenleitung dat0 (=PIN7) ein BUSY-Signal anzulegen. Ist die dat0 Leitung im logischen Zustand LOW, so wird dem Endgerät 2 damit angezeigt, dass die Karte 1 weiterhin mit Energie zu versorgen ist. Endgeräteseitig kann dies mittels Polling via Treiber erreicht werden.

Die Prozessoreinheit 7 kommuniziert mittels des bekannten T=0/T=1 Protokolls 9a mit dem Sicherheitselement 9. Das Sicherheitselement 9 wiederum ist über ein Sig_In 9b und ein Sig_Out 9c mit der NFC-Sende-/ Empfangseinheit 8 verbunden.

Ein von der Detektiereinheit 6 in der NFC-Sende-/Empfangseinheit 8 detektiertes NFC-Signal 10 von der externen NFC-Einheit 3 wird nun direkt der Prozessoreinheit 7 zugeführt. Die Prozessoreinheit 7 wertet das NFC-Signal 10 aus und beschaltet dann entsprechend das Datensignal auf der Datenleitung dat0.

In Figur 4 ist ein erstes Ausführungsbeispiel einer Detektiereinheit 6 und eine detailliertere Darstellung der NFC-Sende-/Empfangseinheit 8 gezeigt. Solange an der NFC-Antenne der Karte 1 kein Trägersignal der externen NFC-Einheit 3 anliegt, ist der logische Zustand des NFC-Signals 10 "HIGH". Dieses HIGH Signal, was im Übrigen dem Sig_out Signal 9c für das Sicherheitselement 9 entspricht, wird in der Detektiereinheit 6 der Prozessoreinheit ausgewertet. Wird der Prozessoreinheit 7 seitens des Endgeräts 2 oder des Sicherheitselements 9 signalisiert, dass eine NFC-Datenkommunikation erwartet wird, wird das dat0 Signal auf BUSY geschaltet. Wird nun ein NFC-Signal der externen NFC-Einheit 3 an der Einheit 8 empfangen, wird das Trägersignal sowie die digitalen Daten durch Unterdrückung der Trägerfrequenz ausgegeben. Bei einem negativen Flankenwechsel des NFC-Signals 10 vom logischen HIGH nach LOW wird nun das BUSY Signal (dat0 = LOW) gesetzt. Dieses dat0 wird nun vom Endgerät 2 ausgewertet und gegebenenfalls auf einem Display für einen Benutzer dargestellt. Die Versorgungsspannung wird nun nicht abgeschaltet, solange die kontaktlose Datenkommunikation mit der externen NFC-Einheit 3 nicht abgeschlossen ist und vom Sicherheitselement 7 eine entsprechende Bestätigung an die Prozessoreinheit 7 gesendet wird. Wenn von der Prozessoreinheit 7 das dat0 = HIGH gesetzt wird, darf das Endgerät 2 die Versorgungsspannung abschalten.

Die Detektiereinheit 6 weist weiterhin einen digitalen Zähler 6a auf, sodass jeder Flankenwechsel des Trägersignals registriert wird. In der Prozessoreinheit 7 wird ausgehend von jedem registrierten Flankenwechsel ein Timer neu gesetzt. Erst wenn der Timer abgelaufen ist, also wenn in einer gewissen Zeitspanne, beispielsweise 50ms, kein Flankenwechsel stattgefunden hat, wird die Datenleitung dat0 in den inversen logischen Zustand geschaltet. Somit wird das dat0 Datensignal nicht bei jedem Flankenwechsel des Trägersignals umgeschaltet.

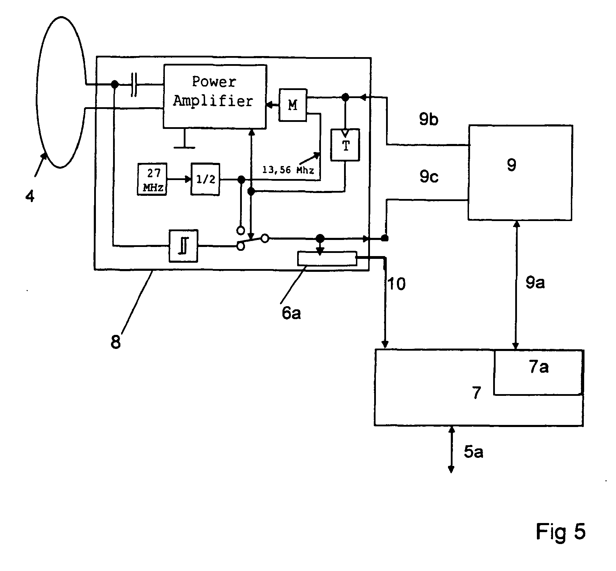

Alternativ wird gemäß Figur 5 der Zähler 6a und Timer in der NFC-Sende-/ Empfangseinheit 8 untergebracht. Somit wird am Ausgang der NFC-Sende-/Empfangseinheit 8 ein digitales Signal erhalten, welches keinen Rückschluss auf die empfangenen NFC-Signaldaten hat. Diese Ausführungsform ist somit sicherer als das Ausführungsbeispiel der Figur 4.

Nicht dargestellt kann die externe NFC-Einheit 3 ein NFC-Leser oder auch ein passiver bzw. aktiver Transponder sein. Gemäß obigen Ausführungen entscheidet sich dadurch, wie der tragbare Datenträger 1 mit Energie zu versorgen ist, sodass die Energiequelle des Endgeräts 2 effizient genutzt und darüber hinaus die Datenkommunikation eingerichtet und erfolgreich ausgeführt werden kann.

### Bezugszeichenliste

- 1: Tragbarer Datenträger
- 2: Erstes Endgerät
- 3: Externe NFC-Einheit,
- 4: Kontaktlosschnittstelle
- 5: Kontaktbehaftete Schnittstelle,
- 5a: micro Secure Digital (µSD) - Schnittstelle
- 6: Detektiereinheit
- 6a: Zähler
- 7: Prozessoreinheit
- 7a: Lesegeräte-Controller
- 8: NFC-Sende-/Empfangseinheit
- 9: Sicherheitselement
- 9a: T=0/T=1 Schnittstelle
- 9b: Sig_In, Ausgangssignal des Sicherheitselements
- 9c: Sig_Out, Eingangssignal des Sicherheitselements
- 10: NFC-Signal

## Patentansprüche

1. Tragbarer Datenträger (1), insbesondere Chipkarte, aufweisend:
- eine kontaktbehaftete Schnittstelle (5), eingerichtet zur Datenkommunikation mit einem ersten Endgerät (2), wobei das Endgerät (2) den Datenträger (1) mit Energie versorgt;
- eine Kontaktlosschnittstelle (4), eingerichtet zur Datenkommunikation mit einer externen NFC-Einheit (3) und
- eine Detektiereinheit (6) eingerichtet zum Detektieren eines NFC-Signals (10) der externen NFC-Einheit (3);
**dadurch gekennzeichnet dass**, die kontaktbehaftete Schnittstelle (5) eine Datenleitung (dat0) aufweist, wobei über die Datenleitung (dat0) ein, vom Datenträger (1) erzeugtes Datensignal an das erste Endgerät (2) übertragbar ist, wobei das Datensignal (dat0) dem ersten Endgerät (2) in einem ersten logischen Zustand anzeigt, ob ein NFC-Signal (10) detektiert ist und das Datensignal (dat0) dem ersten Endgerät (2) im zweiten logischen Zustand anzeigt, ob kein NFC-Signal (10) detektiert ist, während das erste Endgerät (2) den Datenträger mit Energie versorgt.

2. Tragbarer Datenträger nach Anspruch 1, wobei die externe NFC-Einheit (3) ein NFC-Transponder oder ein NFC-Endgerät ist.

3. Tragbarer Datenträger nach einem der vorhergehenden Ansprüche, wobei der Datenträger weiterhin ein Sicherheitselement (9) und eine Prozessoreinheit (7) aufweist, wobei das NFC-Signal (10) ein Eingangssignal (9c) für das Sicherheitselement (9) ist.

4. Tragbarer Datenträger nach einem der vorhergehenden Ansprüche, wobei die Detektiereinheit (6) das Trägersignal des NFC-Signals (10) mittels eines Zählers (6a) auswertet.

5. Tragbarer Datenträger nach einem der vorhergehenden Ansprüche, wobei der Datenträger (1) im ersten Endgerät (2) eingebracht ist und vom ersten Endgerät (2) über die kontaktbehaftete Schnittstelle (5) mit Energie versorgt ist.

6. Tragbarer Datenträger nach einem der Ansprüche 1 bis 4, wobei die Energieversorgung des Datenträgers (1) von der externen NFC-Einheit (3) über die Kontaktlosschnittstelle (4) erfolgt sobald der Datenträger in Übertragungsreichweite des NFC-Lesegeräts ist

7. Tragbarer Datenträger nach einem der vorhergehenden Ansprüche, wobei das Datensignal (dat0) als ein BUSY-Signal gemäß der SD-Spezifikation Version 3.00 im ersten Endgerät (2) auswertbar ist, indem in einem ersten logischen Zustand des Datensignals (dat0) das erste Endgerät (2) eingerichtet ist, die Versorgungsspannung über die kontaktbehaftete Schnittstelle zu deaktivieren, wohingegen in einem zweiten logischen Zustand des Datensignals (dat0) die Versorgungsspannung aktiviert bleiben muss.

8. Tragbarer Datenträger nach einem der vorhergehenden Ansprüche, wobei das Datensignal (dat0) im ersten Endgerät (2) derart auswertbar ist, dass das Datensignal in einem ersten logischen Zustand dem Endgerät (2) anzeigt, das die externe NFC-Einheit (3) zur Datenkommunikation über die Kontaktlosschnittstelle (4) vorhanden ist und in einem zweiten logischen Zustand dem Endgerät anzeigt, das die externe NFC-Einheit (3) zur Datenkommunikation über die Kontaktlosschnittstelle (4) nicht vorhanden ist.

9. Tragbarer Datenträger nach einem der vorhergehenden Ansprüche, wobei der Datenträger über die Kontaktlosschnittstelle (4) entweder mittels aktiver Lastmodulation oder passiver Lastmodulation oder mittels eines Nahfeld-Lesegerät Protokolls in Datenkommunikation mit der externen NFC-Einheit (3) ist.

10. Verfahren zum Anzeigen des Vorhandenseins einer externen NFC-Einheit (3) mittels eines Datenträgers (1) nach einem der vorhergehenden Ansprüche mit den Verfahrensschritten:
- Versorgen des Datenträgers mit Energie über die kontaktbehaftete Schnittstelle;
- Detektieren des NFC-Signals (10) der externen NFC-Einheit (3) mittels der Detektiereinheit (6) innerhalb des Datenträgers (1);
- Übertragen des Datensignals über die kontaktbehaftete Schnittstelle (5) zu dem ersten Endgerät derart, dass ein erster logischer Zustand des Datensignal (dat0) dem ersten Endgerät (2) anzeigt, dass ein NFC-Signal (10) detektiert wurde und ein zweiter logischer Zustand des Datensignals (dat0) dem ersten Endgerät (2) anzeigt, dass kein NFC-Signal detektiert wurde, während das erste Endgerät (2) den Datenträgen mit Energie versorgt.

11. Verfahren nach Anspruch 10, wobei die Detektiereinheit das Vorhandensein eines zum NFC-Signal (10) zugehörigen Trägersignals überprüft und analysiert.

12. Verfahren nach Anspruch 10 oder 11, wobei der Datenträger (1) zumindest solange mit Energie durch das erste Endgerät (2) versorgt wird, bis der Datenträger (1) das Vorhandensein der externen Einheit (3) dem ersten Endgerät (2) anzeigt.

13. Verfahren nach einem der Ansprüche 10 bis 12, wobei der Datenträger (1) eine in dem ersten Endgerät (2) eingesteckte Micro-SD Karte ist und das Datensignal ein Busy-Signal gemäß der SD-Spezifikation Version 3.00 ist.

14. Verfahren nach einem der Ansprüche 10 bis 13, wobei die externe NFC-Einheit (3) ein NFC-Endgerät (2) ist und den Datenträger (1) mit Energie versorgt, sobald der Datenträger in Übertragungsreichweite des NFC-Lesegeräts ist.

15. Verfahren zum Versorgen eines in ein erstes Endgerät (2) eingesteckten tragbaren Datenträgers (1) nach einem der Ansprüche 1 bis 9, wobei der Datenträger (1) durch das Endgerät (2) unkontinuierlich mit Spannung versorgt wird und wobei die Spannungsversorgung dauerhaft aktiviert bleibt, solange der Datenträger (1) dem ersten Endgerät (2) anzeigt, dass keine NFC-Einheit (3) detektiert wurde.

## Claims

1. A portable data carrier (1), in particular a chip card, having:
- a contact-type interface (5), configured for data communication with a first terminal (2), with the terminal (2) supplying the data carrier (1) with energy;
- a contactless interface (4), configured for data communication with an external NFC unit (3), and
- a detection unit (6), configured for detecting an NFC signal (10) of the external NFC unit (3);
**characterized in that** the contact-type interface (5) has a data line (dat0), wherein a data signal generated by the data carrier (1) is transmittable to the first terminal (2) via the data line (dat0), wherein the data signal (dat0) in a first logical state indicates to the first terminal (2) whether an NFC signal (10) is detected, and the data signal (dat0) in the second logical state indicates to the first terminal (2) whether no NFC signal (10) is detected, while the first terminal (2) supplies the data carrier with energy.

2. A portable data carrier according to claim 1, wherein the external NFC unit (3) is an NFC transponder or an NFC terminal.

3. The portable data carrier according to any of the preceding claims, wherein the data carrier further has a security element (9) and a processor unit (7), the NFC signal (10) being an input signal (9c) for the security element (9).

4. The portable data carrier according to any of the preceding claims, wherein the detection unit (6) evaluates the carrier signal of the NFC signal (10) by means of a counter (6a).

5. The portable data carrier according to any of the preceding claims, wherein the data carrier (1) is incorporated in the first terminal (2) and is supplied with energy by the first terminal (2) via the contact-type interface (5).

6. The portable data carrier according to any of the claims 1 to 4, wherein the energy supply of the data carrier (1) takes place through the external NFC unit (3) via the contactless interface (4) as soon as the data carrier is within the transmission range of the NFC reading device.

7. The portable data carrier according to any of the preceding claims, wherein the data signal (dat0) can be evaluated as a BUSY signal of the SD specification version 3.00 in the first terminal (2), with the terminal (2) being configured, in a first logical state of the data signal (dat0), to deactivate the supply voltage via the contact-type interface, whereas the supply voltage must remain activated in a second logical state of the data signal (dat0).

8. The portable data carrier according to any of the preceding claims, wherein the data signal (dat0) can be evaluated in the first terminal (2) in such a fashion that the data signal in a first logical state indicates to the terminal (2) that the external NFC unit (3) is present for data communication via the contactless interface (4), and in a second logical state indicates to the terminal that the external NFC unit (3) is not present for data communication via the contactless interface (4).

9. The portable data carrier according to any of the preceding claims, wherein the data carrier is in data communication with the external NFC unit (3) via the contactless interface (4) either by means of active load modulation or passive load modulation or by means of a near-field reading device protocol.

10. A method for indicating the presence of an external NFC unit (3) by means of a data carrier (1) according to any of the preceding claims, having the method steps of:
- supplying the data carrier with energy via the contact-type interface;
- detecting the NFC signal (10) of the external NFC unit (3) by means of the detection unit (6) within the data carrier (1);
- transmitting the data signal via the contact-type interface (5) to the first terminal in such a fashion that a first logical state of the data signal (dat0) indicates to the first terminal (2) that an NFC signal (10) was detected, and a second logical state of the data signal (dat0) indicates to the first terminal (2) that no NFC signal was detected, while the first terminal (2) supplies the data carrier with energy.

11. The method according to claim 10, wherein the detection unit checks and analyzes the presence of a carrier signal belonging to the NFC signal (10).

12. The method according to claim 10 or 11, wherein the data carrier (1) is supplied with energy by the first terminal (2) at least for such a time until the data carrier (1) indicates the presence of the external unit (3) to the first terminal (2).

13. The method according to any of the claims 10 to 12, wherein the data carrier (1) is a micro SD card inserted in the first terminal (2) and the data signal is a busy signal according to the SD specification version 3.00.

14. The method according to any of the claims 10 to 13, wherein the external NFC unit (3) is an NFC terminal (2) and supplies the data carrier (1) with energy as soon as the data carrier is within the transmission range of the NFC reading device.

15. A method for supplying a portable data carrier (1) according to any of the claims 1 to 9 inserted in a first terminal (2), wherein the data carrier (1) is discontinuously supplied with voltage by the terminal (2), and wherein the voltage supply remains permanently activated as long as the data carrier (1) indicates to the first terminal (2) that no NFC unit (3) was detected.

## Revendications

1. Support de données portable (1), notamment carte à puce, comportant:
- une interface (5) avec contact, configurée pour la communication de données avec un premier terminal (2), le terminal (2) alimentant le support de données (1) en énergie ;
- une interface (4) sans contact, configurée pour la communication de données avec une unité NFC (3) externe et
- une unité de détection (6) configurée pour la détection d'un signal NFC (10) de l'unité NFC (3) externe ;
**caractérisé en ce que** l'interface (5) avec contact comporte une ligne de données (dat0), un signal de données généré par le support de données (1) étant, par l'intermédiaire de la ligne de données (dat0), transmissible au terminal (2), le signal de données (dat0) indiquant au premier terminal (2), dans un premier état logique, si un signal NFC (10) a été détecté, et le signal de données (dat0) indiquant au premier terminal (2), dans un second état logique, si aucun signal NFC (10) n'a été détecté, pendant que le premier terminal (2) alimente le support de données en énergie.

2. Support de données portable selon la revendication 1, l'unité NFC (3) externe étant un transpondeur NFC ou un terminal NFC.

3. Support de données portable selon une des revendications précédentes, le support de données comportant en outre un élément de sécurité (9) et une unité de processeur (7), le signal NFC (10) étant un signal d'entrée (9c) pour l'élément de sécurité (9).

4. Support de données portable selon une des revendications précédentes, l'unité de détection (6) évaluant le signal porteur du signal NFC (10) au moyen d'un compteur (6a).

5. Support de données portable selon une des revendications précédentes, le support de données (1) étant incorporé dans le premier terminal (2) et étant alimenté en énergie par le premier terminal (2) par l'intermédiaire de l'interface (5) avec contact.

6. Support de données portable selon une des revendications de 1 à 4, l'alimentation du support de données (1) en énergie ayant lieu par l'unité NFC (3) externe par l'intermédiaire de l'interface (4) sans contact dès que le support de données est à portée de transmission de l'appareil de lecture NFC.

7. Support de données portable selon une des revendications précédentes, le signal de données (dat0) étant évaluable dans le premier terminal (2) en tant qu'un signal BUSY selon la spécification SD version 3.00, ce qui a lieu en ce que, dans un premier état logique du signal de données (dat0), le premier terminal (2) est configuré pour déactiver la tension d'alimentation par l'intermédiaire de l'interface avec contact, tandis que, dans un second état logique du signal de données (dat0), la tension d'alimentation doit rester activée.

8. Support de données portable selon une des revendications précédentes, le signal de données (dat0) étant, dans le premier terminal (2), évaluable de telle sorte que le signal de données, dans un premier état logique, indique au terminal (2) que l'unité NFC (3) externe est présente pour la communication de données par l'intermédiaire de l'interface sans contact (4), et, dans un second état logique, indique au terminal que l'unité NFC (3) externe n'est pas présente pour la communication de données par l'intermédiaire de l'interface sans contact (4).

9. Support de données portable selon une des revendications précédentes, le support de données étant, par l'intermédiaire de l'interface sans contact (4), soit au moyen de modulation de charge active ou de modulation de charge passive, soit au moyen d'un protocole d'appareil de lecture à champ proche, en communication de données avec l'unité NFC (3) externe.

10. Procédé d'indication de la présence d'une unité NFC (3) externe au moyen d'un support de données (1) selon une des revendications précédentes, comprenant les étapes de procédé :
- alimentation du support de données en énergie par l'intermédiaire de l'interface avec contact ;
- détection du signal NFC (10) de l'unité NFC (3) externe au moyen de l'unité de détection (6) à l'intérieur du support de données (1) ;
- transmission du signal de données, par l'intermédiaire de l'interface (5) avec contact, au premier terminal, de telle sorte qu'un premier état logique du signal de données (dat0) indique au premier terminal (2) qu'un signal NFC (10) a été détecté et qu'un second état logique du signal de données (dat0) indique au premier terminal (2) qu'aucun signal NFC n'a été détecté, pendant que le premier terminal (2) alimente le support de données en énergie.

11. Procédé selon la revendication 10, l'unité de détection vérifiant et analysant la présence d'un signal porteur correspondant au signal NFC (10).

12. Procédé selon la revendication 10 ou 11, le support de données (1) étant alimenté en énergie par le premier terminal (2) au moins jusqu'à ce que le support de données (1) indique au premier terminal (2) la présence de l'unité NFC (3) externe.

13. Procédé selon une des revendications de 10 à 12, le support de données (1) étant une carte Micro-SD enfichée dans le premier terminal (2) et le signal de données étant un signal busy selon la spécification SD version 3.00.

14. Procédé selon une des revendications de 10 à 13, l'unité NFC (3) externe étant un terminal NFC (2) et alimentant le support de données (1) en énergie dès que le support de données est à portée de transmission de l'appareil de lecture NFC.

15. Procédé d'alimentation d'un support de données (1) portable selon une des revendications de 1 à 9 enfiché dans un premier terminal (2), le support de données (1) étant alimenté en tension de manière discontinue par le terminal (2) et l'alimentation en tension restant durablement activée tant que le support de données (1) indique au premier terminal (2) qu'aucune unité NFC (3) n'a été détectée.
